# EUROPEAN PATENT APPLICATION

(11) **EP 4 553 056 A1**
(43) Date of publication of application: **14.05.2025**
(21) Application number: 24153408.0
(22) Date of filing: 23.01.2024
(51) Int. Cl.: C04B 35/443, C04B 35/626, C04B 35/645

(54) **REFRACTORY CHROME-FREE SPINEL MATERIAL BASED ON MG-ZN-FE-AL-O SYSTEM AND METHOD FOR PRODUCING REFRACTORY CHROME-FREE SPINEL MATERIAL**

(30) Priority: 07.11.2023 PL 44666523
(71) Applicant: Akademia Gorniczo-Hutnicza im. Stanislawa Staszica w Krakowie, 30-059 Krakow (PL)
(72) Inventor: Jastrzebska, Ilona, 31-702 Krakow (PL)
(74) Representative: Pietruszynska, Elzbieta

(57) **Abstract**

The subject matter of the invention is a refractory chrome-free spinel material based on Mg-Zn-Fe-Al-O system, characterized in that it comprises a compact microstructure having a pycnometric density in the range from 4.0096 to 4.1610 g/cm³ containing in its composition a multi-component chrome-free high refractory spinel phase, wherein this initial technical spinel has the following chemical composition by weight Al₂O₃ 78.723%, MgO 20.372%, CaO 0.259%, Na₂O 0.197%, Fe₂O₃ 0.187%, SiO₂ 0.179%, and MnO and TiO₂ as the rest to 100% by weight, combined and synthesized by firing at the temperature of 1300-1800°C with ZnO (having a purity 99.9%) and Fe₂O₃ (having a purity 97.2%) in a proportion from 5 to 30 parts by weight in ratio to 100 parts by weight of technical spinel, wherein ZnO and Fe₂O₃ oxides are combined one to another in a weight ratio of 3:1, and the method for producing thereof.

## Description

### Field of the invention

The subject of the invention is a refractory chrome-free spinel material based on Mg-Zn-Fe-Al-O system and a method for producing this refractory chrome-free spinel material. The present invention may find application as a refractory material, a refractory aggregate or a semi-product intended for the production of refractory materials for the metallurgical industry, in particular for copper and lead metallurgy.

### Background

Refractory materials used in copper metallurgy devices are subjected to difficult conditions, including high temperatures up to 1400°C, thermal shocks due to the periodic operation of the devices (especially converters) and aggressive effects of chemical agents, including slag as the most harmful. Such conditions can be met by only selected refractory materials that are characterized by the presence of high melting components in their phase composition and a suitable microstructure, with a particular focus on high compactness.

Many of currently used solutions use materials based on MgO and solid solution of spinels. Semi-products, spinel phase-containing materials, are characterized by a high refractoriness due to the high melting point of spinels above 1500°C, a high resistance to thermal shocks due to the low thermal expansion coefficients of the spinel phase. Typical examples of spinels used in an industry are spinel MgAl₂O₄ and a solid solution of chromite spinel (Mg,Fe)(Cr,Fe,Al)₂O₄ having a melting point above 2000°C. The latter spinel in combination with MgO provides the so-called direct bonding in the material. Hence, a microstructure of the material and its physical features and phase composition play a key role in providing the chemical resistance of the material in the copper refining device.

### State of the art description

Currently, magnesite-chromite materials containing up to approximately 35% Cr₂O₃ in their chemical composition are used in refining furnaces of copper and lead metallurgy.

Chromium oxide and iron oxide are dissolved in MgO at high temperatures and, during cooling, a secondary spinel is precipitated, which is found at grain boundaries between magnesite and a primary spinel, and in the form of inclusions inside MgO grains. The so-called "direct" bonding method of refractory material main components provides very good resistance to penetration by a liquid slag/metal to approximately 1700°C. Additionally, as a result of the difference in thermal expansion coefficients at the boundary of spinel inclusion/MgO the micro-cracks are formed, which cause the material to become more flexible and increase resistance of the material for thermal shocks. All these features cause, that materials with Cr₂O₃ work well in metallurgical conditions.

However, these materials have a disadvantageous feature that is a presence of toxic chromium (III) oxide in chemical composition. Additionally, in the operating conditions of copper/lead refining furnaces, under the influence of oxygen presence, which is present in the fed reaction gas, and alkali or alkaline earth metal oxides (added for refining purpose), the chromium (III) oxide contained in the materials is oxidized and chromium (VI) compounds are formed, which belong to carcinogens of group 1. The presence of these compounds in spent refractory linings and copper slags generates a risk of groundwater contamination, and the presence of chrome-rich sols in the vicinity of refining devices can generate risks for the environment and workers. Chromium (VI) compounds cause dermatological diseases and respiratory dysfunctions. For this reason, chromium oxide should be eliminated from use in the production of refractory materials. Some industrial sectors have already eliminated them completely, an example being the cement industry, where magnesite-spinel (MgO-MgAl₂O₄) refractory material is used as a substitute material.

Magnesite-chromite (or corundum-chromite) materials are produced on the basis of MgO and spinel having a complex chemical composition that can be described by the molecular formula (Mg,Fe)(Cr,Fe,Al)₂O₄. Chromite ores, magnesite-chromite clinkers or coclinkers (the source of the complex spinel) are chrome-bearing semi-products for the production of refractory materials. The characteristics of the fundamental semi-products used in the production of alkali refractory materials for metallurgy are presented below.

In the paper by M.A. Serry, A.G.M. Othman, L.G. Girgis and R. Telle, entitled "Assessment of Coclinkered Shaped Magnesite-Chromite Refractories Processed from Egyptian Materials", American Ceramic Society Bulletin, Vol. 86, No. 2, pp. 9102-9106, the properties of the fundamental semi-products for the production of alkali materials are presented, including 2 magnesite-chromite clinkers (MC, 30% of chromite ore) and 2 chromite-magnesite clinkers (CM, 70% of chromite ore), obtained by joint firing of magnesium-bearing raw material (from seawater or from natural magnesite) and chromite ore in different proportions. The chromite ore was characterized by chemical composition: Cr₂O₃ 46.32%, MgO 19.87%, Al₂O₃ 14.53%, Fe₂O₃ 12.40%, SiO₂ 4.36%, CaO 0.42%, and the magnesium-bearing raw material from seawater had more than 62.64% MgO, and the natural magnesite more than 46.79% MgO. Four types of refractory semi-products were produced. MC and CM clinkers were characterized by an average MgO content of 51/14% and an average total spinel solution content of 43/78%, respectively. The total content of silicate phases of monticellite CaO·MgO·SiO₂ and forsterite 2MgO·SiO₂ in both clinker types was below 10%. The microstructures of both clinkers had direct bonding of MgO-spinel, but silicate phases were also present at the boundaries, significantly reducing the thermal properties of the semi-products. The MC aggregate had an average apparent density of 2.96 g/cm³ and the CM 3.01 g/cm³. The open porosity was equal to 18.4% and 16.8% for the MC and CM aggregates, respectively. The compactness results show that a low compactness material was obtained, which is unfavorable from the point of view of corrosion resistance and liquid slag penetration.

In the paper by Q. Zhao, C. Liu, D. Yang, P. Shi, M. Jiang, B. Li, H. Saxen, R. Zevenhoven entitled "A cleaner method for preparation of chromium oxide from chromite" Process Safety and Environment Protection doi: 10.1016/j.psep.2016.09.017, presents a method for obtaining a spinel semi-product, having a dense microstructure, by extraction from chromite ore, containing spinel (Mg,Fe)(Cr,Al,Fe)₂O₄ and enstatite MgSiO₃ impurity, using an extractant derived from the processing of chromium (VI) compounds-rich ores. After 60 minutes of leaching, a material having a high content of spinel (Mg,Fe)(Cr,Al,Fe)₂O₄ and the compact microstructure was obtained, but no other material parameters were reported. The material was formed at an intermediate stage of chromite ore leaching.

From the patent publication CN108129136A, a magnesite-forsterite material with addition of carbon for copper converters is known. The material is obtained by sintering method. The presence of aluminum titanate in the material causes the absorption of FeO from a copper slag, so that the proportion of SiO₂ in the slag is increased, thus increasing the viscosity of the slag and its ability to penetrate into the refractory material. It was reported that the porosity of the material is 7-13%, the thermal shock resistance at 1100°C is 5 cycles and the erosion resistance to copper matte is 10000-12000 hours. A microstructure of the material is not shown.

From the patent publication EP0653390A1, a method of obtaining a semi-product and a material based on the phase components MgO and spinel MgAl₂O₄ for the cement industry is known. The semi-product is produced on the basis of sintered or fused spinel aggregate containing a minimum of 27% MgO and fused magnesite aggregate containing a minimum of 85% MgO. The semi-product produced by sintering method was characterized by an average MgO content of 80% and Al₂O₃ of 17%. The material produced on the basis of the semi-product was characterized by an average open porosity of 18% and an apparent density of 3.55 g/cm³. The physical properties of the semi-product were not presented. A possible addition of Al₂O₃ powder, which will form an in-situ spinel, was suggested, which may result in a densification of microstructure of the semi-product and the material. The microstructure of the semi-product and the material was not presented.

From the patent publication CN113061045B a method for obtaining a material containing oxides of magnesium, iron, zinc and aluminum in its composition is known. The raw materials for the production of the material are two types of magnesite, including one having a high purity and the other containing an increased content of iron oxide, spinel and zinc oxide having nanometric size. The material was produced by firing at 1550-1650°C. During firing, nano-ZnO reacts with MgO and Al₂O₃ forming a spinel and a solid solution ZnO-MgO. The produced material has a phase composition characterized by the presence of high-melting phases, i.e. MgO, 2 types of spinels MgO·Al₂O₃ and ZnO·Al₂O₃ and the solid solution (Zn,Mg)O. High chemical resistance of the produced material was found, provided by the high-melting spinel matrix. However, physical features and a microstructure of the material were not presented.

From the patent publication CN103896613A, a method for obtaining a magnesite-corundum material based on magnesite having an increased content of iron oxide is known. The initial chemical composition of a mixture included 80% of magnesite having the increased iron content and 1-20% of corundum. The advantage of an invention is a production of the material having the high strength parameters using low-purity raw materials, creating in the matrix a spinel material having a high melting point and capable of creating a protective layer. The material has an open porosity of 14% and an apparent density of 3.11 g/cm³. High erosion and corrosion resistance of the material was found, although the test results were not presented. A microstructure of the material is not presented.

Therefore, the aim of the present invention is to develop a method for producing a refractory semi-product/material intended for the production of refractory materials for thermal devices lining in the metallurgical industry, in particular the copper industry.

Moreover, the aim of the invention is the new refractory material which does not contain toxic chromium in chemical composition thereof and is characterized by high refractoriness, resistance to temperature shocks and chemical resistance to aggressive slags activity. The developed material can be used directly as a compact, high refractory material or a semi-product for the production of alternative chrome-free refractory materials for the copper industry, as well as other industrial sectors such as lead and zinc production, steel, cement and glass industry.

### Disclosure of the invention

The subject matter of this invention is to develop a new solution comprising a refractory chrome-free spinel material based on Mg-Zn-Fe-Al-O system, characterized in that it comprises a compact microstructure having a pycnometric density in the range from 4.0096 to 4.1610 g/cm³ containing in its composition a multi-component chrome-free high refractory spinel phase, wherein this initial technical spinel has the following chemical composition by weight of Al₂O₃ 78.723%, MgO 20.372%, CaO 0.259%, Na₂O 0.197%, Fe₂O₃ 0.187%, SiO₂ 0.179%, and MnO and TiO₂ as the rest to 100% by weight, combined and synthesized by firing at the temperature of 1300-1800°C with ZnO (having a purity 99.9%) and Fe₂O₃ (having a purity 97.2%) in a proportion from 5 to 30 parts by weight in ratio to 100 parts by weight of technical spinel, wherein ZnO and Fe₂O₃ oxides are combined one to another in a weight ratio of 3:1.

The invention further comprises a method for producing a refractory chrome-free spinel material based on Mg-Zn-Fe-Al-O system, characterized in that it is obtained as follows:
- initially 100 parts by weight of technical spinel having a chemical composition by weight of Al₂O₃ 78.723%, MgO 20.372%, CaO 0.259%, Na₂O 0.197%, Fe₂O₃ 0.187%, SiO₂ 0.179%, and from 5 to 30 parts by weight of mixture of ZnO and Fe₂O₃, with the weight ratio ZnO:Fe₂O₃ 3:1 and taking into consideration the purity of the oxide ZnO and Fe₂O₃, are weighed;
- the weighed mixture is subjected to grinding in a ball mill to produce a mixture of ground material, wherein the grinding is carried out wet or dry, for at least 1 hour;
- the stirred material is subjected to drying, for at least 12 hours, at the temperature of at least 100°C, subsequently
- briquettes are formed from the obtained mixture and are subjected to a 2-stage firing, wherein a first stage of firing involves heating the shaped pieces previously pressed into briquettes under a pressure of 80 - 500 MPa and sintered at 900-1300°C in order to preliminary roasting and pre-reacting the ingredients for 1 to 3 hours, to produce a calcinate; subsequently
- the calcinate is crumbled into a powder having a grain size of less than 63 micrometers,
- to the obtained mixture of calcinate a polyvinyl alcohol solution is added in an amount of 1-15% by weight, based on the total weight of the mixture, and the mixture is stirred to form granules; subsequently
- the shaped pieces are subjected to pressing under a pressure of min. 100-600 MPa, wherein the edges of the mold are each time lubricated with a lubricant in the form of a solution of stearic acid or sodium stearate;
- the such prepared shaped pieces are subjected to a second stage of heat treatment by firing at the temperature of 1300-1800°C, preferably 1700°C, for 2-10 hours, preferably 4 hours. Preferably, in the method according to the invention, from 5 to 80% by weight of the mixture of ZnO and Fe₂O₃ oxides, which are combined one to another in a weight ratio of 3:1, is added to the technical spinel.

Preferably, in the method according to the invention, the weight ratio of the mixture of ZnO and Fe₂O₃ oxides in the chemical composition of the material is from 10:1 to 1:10.

Preferably, in the method according to the invention, Fe₂O₃ oxide is added to the technical spinel instead of the mixture of ZnO + Fe₂O₃.

Preferably, in the method according to the invention, ZnO oxide is added to the technical spinel instead of the mixture of ZnO+ Fe₂O₃.

Preferably, in the method according to the invention, the technical spinel containing at least 50% of MgO in its chemical composition is used.

Preferably, in the method according to the invention, the technical spinel containing at least 50% Al₂O₃ in its chemical composition is used.

Preferably, in the method according to the invention, the 1-stage process of high-temperature treatment of the material is carried out.

Preferably, in the method according to the invention, grinding is carried out in the ball mill for 2-5 hours, most preferably for 2 hours.

Preferably, in the method according to the invention, during grinding the weight ratio of ground material:balls:anhydrous or aqueous solvent is 1:1:1.

Preferably, in the method according to the invention, anhydrous solvents selected from methanol, ethanol, acetone, isopropanol, dimethylsulfoxide, tetrahydrofuran, N,N-dimethylformamide and toluene, preferably isopropanol, or aqueous solvents are used.

Preferably, in the method according to the invention, the material is subjected to drying for 12-24 hours at the temperature of 105-110°C.

Preferably, in the method according to the invention, to the obtained mixture of calcinate the polyvinyl alcohol solution is added in an amount of 5-15%, most preferably 10% of polyvinyl alcohol solution, based on the total weight of the mixture.

The new invention that is the subject of this application constitutes a refractory material having a complex chemical composition based on the MgO-Al₂O₃-Fe₂O₃-ZnO system, therefore it does not contain toxic chromium in its chemical composition. This material is characterized by a favorable, compact microstructure, containing a multi-component, high refractory chrome-free spinel phase, having a high corrosion resistance to copper slag activity and resistance to thermal shocks, thanks to which it can be used for the production of refractory linings in copper metallurgy.

### Brief description of the drawings

The subject matter of the invention is shown in the embodiments, with reference to the attached drawings, in which:
**FIG. 1** shows the microstructure of magnesite-chromite coclinker with direct bonding of chrome spinel grains and magnesite (state of the art), own photo, commonly used for the production of refractory materials for the copper industry and other industrial sectors.
**FIG. 2** shows the microstructure of a chrome-free spinel material according to the invention, containing 30% by weight addition (ZnO+Fe₂O₃) to the technical spinel of class 78, with direct bonding of spinel grains.

### Detailed description of the invention

The subject matter of the present invention is described in detail below with reference to the attached Figures and embodiments. The present invention is not limited only to the detailed embodiments described herein.

### Reference example:

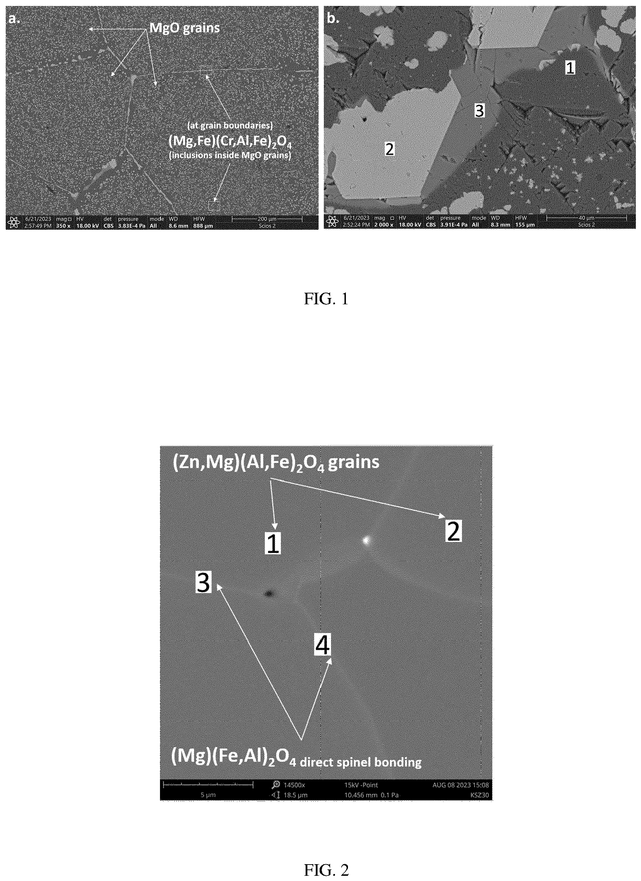

Reference material: magnesite-chromite coclinker, obtained by melting of magnesite (source of MgO) and chromite ore concentrate (source of chrome spinel (Mg,Fe)(Cr,Al,Fe)₂O₄), is an aggregate based on the MgO-Al₂O₃-Fe₂O₃-Cr₂O₃ system. It is a semi-product widely used in the production of refractory materials used for the linings of most of the refining devices used on the world in copper and lead metallurgy. It is also used in materials for other industrial sectors, including e.g. for steel industry (in devices for vacuum degassing of steel). Coclinker is characterized by an actual density equaled to 4.1144 g/cm³ (with a standard deviation of 0.0132 g/cm³) tested by a helium pycnometry method. Its microstructure is shown in FIG. 1. The microstructure is characterized by the presence of direct bonding of MgO-chrome spinel and chrome spinel inclusion inside MgO grains. The spinel phase has a complex composition, it can be expressed by the formula (Mg,Fe)(Cr,Al,Fe)₂O₄. The secondary phase of monticellite CaMgSiO₄ (unfavorable phase, polluting the microstructure) is also present in the microstructure, which is often found to reduce the resistance properties of the material. In the Table 1 is shown the chemical composition in the micro-areas of the magnesite-chromite coclinker.

**Table. 1. Chemical analysis by EDS (i.e. energy dispersive X-ray spectroscopy method) in micro-areas marked in the photo FIG. 1b in points 1, 2 and 3.**

| Point | Chemical composition by EDS [at. %]* | | | | | | Phase component |
|---|---|---|---|---|---|---|---|
| | Mg | Cr | Al | Fe | Si | Ca | |
| 1 | 40.0 | 0.4 | - | 1.8 | - | - | MgO |
| 2 | 11.1 | 17.4 | 5.2 | 0.6 | - | - | (Mg,Fe)(Cr,Al,Fe)₂O₄) |
| 3 | 11.6 | - | 0.1 | 0.5 | 10.8 | 12.4 | CaO·MgO·SiO₂ |

| | | | | | | | |
|---|---|---|---|---|---|---|---|
| *the rest to 100% constitutes oxygen. | | | | | | | |

According to the present invention, the refractory material having a complex chemical composition is based on the MgO-Al₂O₃-ZnO-Fe₂O₃ system, therefore it does not contain toxic chromium in its chemical composition.

### Example 1:

To prepare a compact high refractory material based on a MgO-Al₂O₃-ZnO-Fe₂O₃ system the industrial (technical) spinel of class 78, having a grain size of 0-0.02mm and a chemical composition by weight: Al₂O₃ 78.723%, MgO 20.372%, CaO 0.259%, Na₂O 0.197%, Fe₂O₃ 0.187%, SiO₂ 0.179% (the rest to 100% constitutes MnO, TiO₂) was used, which was combined with ZnO oxide having a purity of 99.9% (0 g ignition loss) and with Fe₂O₃ oxide having a purity of 97.2% (2.668 g ignition loss). Technical spinel of class 78 is stirred with the addition of a mixture (ZnO+Fe₂O₃) in an amount of 5% by weight of the mixture ZnO+Fe₂O₃, wherein ZnO and Fe₂O₃ oxides are combined in a weight ratio of 3:1.

Spinel material with 5% addition by weight of the mixture (ZnO+Fe₂O₃) is obtained by preliminary weighing of 100 parts by weight of technical spinel of class 78 and 5 parts by weight of the mixture of ZnO and Fe₂O₃, with the quantitative ratio ZnO:Fe₂O₃ of 3:1 parts by weight. After weighing the mixture is subjected to grinding in a ball mill. Wet milling is carried out for 2 hours, wherein the ratio of ground material:balls:isopropanol is 1:1:1. In the method according to the invention, as a solvent can be used anhydrous solvents selected from methanol, ethanol, acetone, isopropanol, dimethylsulfoxide, tetrahydrofuran, N,N-dimethylformamide and toluene, preferably isopropanol is used, or aqueous solvents.

The mixture stirred in appropriate proportions is subjected to drying for 24 hours at the temperature of 110°C. Subsequently, briquettes are formed from mixtures and are subjected to 2-stage firing. The first stage of firing involves heating the shaped pieces (previously pressed into briquettes under pressure of 80 MPa) at 1100°C in order to preliminary roasting and pre-reacting the ingredients for 1 hour at a heating rate to a maximum temperature of 4°C/min. A calcinate is subsequently crumbled into a powder having a grain size of less than 63 micrometers. To the obtained mixture 10% polyvinyl alcohol solution is added in an amount of 10% by weight to mass. The mixture is stirred for 10 minutes by hand to form granules. Such prepared mass is subsequently pressed into shaped pieces under the pressure of 500 MPa. The edges of the mold are each time lubricated with a lubricant in the form of a solution of stearic acid or zinc stearate. Material obtained by this method is characterized by the following properties:
- phase composition: 100% spinel phase (determined by X-ray diffractometry method),
- average linear shrinkage after firing: 5.4% (determined by measuring the diameter of the sample before and after firing),
- high hardness (determined by the Vickers method),
- pycnometric density: 4.0096 g/cm³ (determined by the helium pycnometry method),
- open porosity: 2.3% (determined by the Archimedes immersion method),
- apparent density: 2.56 g/cm ³ (determined by the Archimedes immersion method),
- compact microstructure shown in Fig. 2, containing direct bonding of spinel grains.

### Example 2:

To prepare a compact high refractory material based on a MgO-Al₂O₃-ZnO-Fe₂O₃ system the industrial (technical) spinel of class 78, having a grain size of 0-0.02mm and a chemical composition by weight: Al₂O₃ 78.723%, MgO 20.372%, CaO 0.259%, Na₂O 0.197%, Fe₂O₃ 0.187%, SiO₂ 0.179% (the rest to 100% constitutes MnO, TiO₂) was used, which was combined with ZnO oxide having a purity of 99.9% (0 g ignition loss) and with Fe₂O₃ oxide having a purity of 97.2% (2.668 g roasting loss). Technical spinel of class 78 is stirred with the addition of a mixture (ZnO+Fe₂O₃) in an amount of 30% by weight of the mixture of ZnO+Fe₂O₃, wherein ZnO and Fe₂O₃ oxides are combined in a weight ratio of 3:1.

Spinel material with 30% addition by weight of the mixture (ZnO+Fe₂O₃) is obtained by preliminary weighing of 100 parts by weight of technical spinel of class 78 and 30 parts by weight of the mixture of ZnO and Fe₂O₃, with the quantitative ratio ZnO:Fe₂O₃ of 22,5:7,5 parts by weight. After weighing the mixture is subjected to grinding in a ball mill. Wet milling is carried out for 2 hours, wherein the ratio of ground material:balls:isopropanol is 1:1:1. In the method according to the invention, as a solvent can be used anhydrous solvents selected from methanol, ethanol, acetone, isopropanol, dimethylsulfoxide, tetrahydrofuran, N,N-dimethylformamide and toluene, preferably isopropanol is used, or aqueous solvents.

The mixture stirred in appropriate proportions is subjected to drying for 24 hours at the temperature of 110°C. Subsequently, briquettes are formed from mixtures and are subjected to 2-stage firing. The first stage of firing involves heating the shaped pieces (previously pressed into briquettes under pressure of 80 MPa) at 1100°C in order to preliminary roasting and pre-reacting the ingredients for 1 hour at a heating rate to a maximum temperature of 4°C/min. A calcinate is subsequently crumbled into a powder having a grain size of less than 63 micrometers. To the obtained mixture 10% polyvinyl alcohol solution is added in an amount of 10% by weight to mass. The mixture is stirred for 10 minutes by hand to form granules. Such prepared mass is subsequently pressed into shaped pieces under the pressure of 500 MPa. The edges of the mold are each time lubricated with a lubricant in the form of a solution of stearic acid. Such prepared pellets are sintered at the temperature of 1700°C for 4 hours. Material obtained by this method is characterized by the following properties:
- phase composition: 100% spinel phase (determined by X-ray diffractometry method),
- average linear contraction after firing: 5.4% (determined by measuring the diameter of the sample before and after firing),
- high hardness (determined by the Vickers method),
- pycnometric density: 4.1610 g/cm³ (determined by the helium pycnometry method),
- open porosity: 1.0% (determined by the Archimedes immersion method),
- apparent density: 3.0 g/cm³ (determined by the Archimedes immersion method),
- compact microstructure shown in Fig. 2.

**Table. 1 Chemical analysis by EDS in the micro-areas marked in the photo of FIG. 2.**

| Point | Chemical composition bv EDS [at. %]* | | | | | | | Zn/Fe mol. | Zn/Fe wt. | Phase component |
|---|---|---|---|---|---|---|---|---|---|---|
| | Mg | Cr | Al | Fe | Si | Ca | Zn | | | |
| 1 | 9.7 | - | 28.9 | 1.7 | - | - | 5.1 | 3.0 | 3.6 | Zn-rich spinel (Mg,Zn)(Al,Fe)₂O₄ |
| 2 | 9.9 | - | 28.7 | 1.7 | - | - | 5.0 | 3.1 | 3.6 | |
| 3 | 9.6 | - | 27.9 | 1.7 | - | - | 4.5 | 2.6 | 3.2 | Fe-rich spinel (Mg,Zn)(Al,Fe)₂O₄ |
| 4 | 11.9 | - | 24.1 | 1.9 | - | - | 5.0 | 2.6 | 3.1 | |

| | | | | | | | | | | |
|---|---|---|---|---|---|---|---|---|---|---|
| *the rest to 100% constitutes oxygen. | | | | | | | | | | |

**Table. 2 Physical properties of chrome-free spinel materials.**

| Additive content (ZnO+Fe₂O₃) [% by weight] | Pycnometric density [g/cm³] | Apparent density [g/cm³] | Open porosity [%] |
|---|---|---|---|
| 5 | 4.0096 | 2.56 | 2.3 |
| 10 | 4.0491 | 3.62 | 2.1 |
| 20 | 4.0824 | 3.76 | 0.9 |
| 30 | 4.1610 | 3.00 | 1.0 |

The resulting monophase material according to the invention containing a complex multi-component chrome-free spinel (Mg,Zn)(Fe,Al)₂O₄ has a pycnometric density in the range from 4.0096 to 4.1610 g/cm³, therefore it is similar in terms of physical properties to a competitive magnesite-chromite coclinker (as in the reference example), commonly used in the production of magnesite-chromite materials applied as thermal linings of refining furnaces in copper metallurgy. According to the invention, the developed solution can be used as a compact high refractory material or a semi-product for the production of alternative chrome-free refractory materials.

The high refractory chrome-free material according to the invention can also be used after grinding and combining with other ingredients as a refractory chrome-free aggregate for the production of refractory materials for the metallurgical industry.

## Claims

1. A refractory chrome-free spinel material based on Mg-Zn-Fe-Al-O system, is **characterized in that** it comprises a compact microstructure having a pycnometric density in the range from 4.0096 to 4.1610 g/cm³ containing in its composition a multi-component chrome-free high refractory spinel phase, wherein this initial technical spinel has the following chemical composition by weight of Al₂O₃ 78.723%, MgO 20.372%, CaO 0.259%, Na₂O 0.197%, Fe₂O₃ 0.187%, SiO₂ 0.179%, and MnO and TiO₂ as the rest to 100% by weight, combined and synthesized by firing at the temperature of 1300-1800°C with ZnO (having a purity 99.9%) and Fe₂O₃ (having a purity 97.2%) in a proportion from 5 to 30 parts by weight in ratio to 100 parts by weight of technical spinel, wherein ZnO and Fe₂O₃ oxides are combined one to another in a weight ratio of 3:1.

2. A method for producing a refractory chrome-free spinel material based on Mg-Zn-Fe-Al-O system, **characterized in that** it is obtained as follows:
- initially 100 parts by weight of technical spinel having a chemical composition by weight of Al₂O₃ 78.723%, MgO 20.372%, CaO 0.259%, Na₂O 0.197%, Fe₂O₃ 0.187%, SiO₂ 0.179%, and from 5 to 30 parts by weight of the mixture of ZnO and Fe₂O₃, with the weight ratio ZnO:Fe₂O₃ 3:1 taking into consideration the purity of the oxide ZnO and Fe₂O₃, are weighed;
- the weighed mixture is subjected to grinding in a ball mill to produce a mixture of ground material, wherein the grinding is carried out wet or dry, for at least 1 hour,
- the stirred material is subjected to drying, for at least 12 hours, at the temperature of at least 100°C; subsequently
- briquettes are formed from the obtained mixture and are subjected to a 2-stage firing, wherein a first stage of firing involves heating the shaped pieces previously pressed into briquettes at 900-1300°C under a pressure of 80 - 500 MPa in order to preliminary roasting and pre-reacting the ingredients for 1 to 3 hours, to produce a calcinate; subsequently
- the calcinate is crumbled into a powder having a grain size of less than 63 micrometers,
- to the obtained mixture of calcinate a polyvinyl alcohol solution is added in an amount of 1-15% by weight, based on the total weight of the mixture, and the mixture is stirred to form granules; subsequently
- the shaped pieces are subjected to pressing under a pressure of min. 100-600 MPa, wherein the edges of the mold are each time lubricated with a lubricant in the form of a solution of stearic acid or sodium stearate;
- the such prepared shaped pieces are subjected to a second stage of heat treatment by firing at the temperature of 1300-1800°C, preferably 1700°C, for 2-10 hours, preferably 4 hours.

3. The method according to claim 2, **characterized in that** from 5 to 80% by weight of the mixture of ZnO and Fe₂O₃ oxides, which are combined one to another in a weight ratio of 3:1, is added to the technical spinel.

4. The method according to claim 2, **characterized in that** the weight ratio of the mixture of ZnO and Fe₂O₃ oxides in the chemical composition of the material is from 10:1 to 1:10.

5. The method according to claim 2, **characterized in that** Fe₂O₃ oxide is added to the technical spinel instead of the mixture of ZnO+Fe₂O₃.

6. The method according to claim 2, **characterized in that** ZnO oxide is added to the technical spinel instead of the mixture of ZnO+Fe₂O₃.

7. The method according to claim 2, **characterized in that** the technical spinel containing at least 50% of MgO in its chemical composition is used.

8. The method according to claim 2, **characterized in that** the technical spinel containing at least 50% Al₂O₃ in its chemical composition is used.

9. The method according to claim 2-8, **characterized in that** the 1-stage process of high temperature treatment of the material is carried out.

10. The method according to claim 2-9, **characterized in that** grinding is carried out in the ball mill for 2-5 hours, most preferably for 2 hours.

11. The method according to claim 2-10, **characterized in that** during grinding the weight ratio of ground material:balls:anhydrous or aqueous solvent is 1:1:1.

12. The method according to claim 2-11, **characterized in that** anhydrous solvents selected from methanol, ethanol, acetone, isopropanol, dimethylsulfoxide, tetrahydrofuran, N,N-dimethylformamide and toluene, preferably isopropanol, or aqueous solvents are used.

13. The method according to claim 2-12, **characterized in that** the material is subjected to drying for 12-24 hours at the temperature of 105-110°C.

14. The method according to claim 2-13, **characterized in that** to the obtained mixture of calcinate the polyvinyl alcohol solution is added in an amount of 5-15%, most preferably 10% of polyvinyl alcohol solution, based on the total weight of the mixture.
